# EUROPÄISCHE PATENTSCHRIFT

(11) **EP 0 835 215 B1**
(45) Veröffentlichungstag und Bekanntmachung des Hinweises auf die Patenterteilung: **19.05.1999**
(21) Anmeldenummer: 96923919.3
(22) Anmeldetag: 25.06.1996
(51) Int. Cl.: B65G 65/23

(54) **VORRICHTUNG ZUM AUTOMATISCHEN ENTLEEREN EINES BEHÄLTERS**
DEVICE FOR AUTOMATICALLY EMPTYING A CONTAINER
DISPOSITIF DESTINE AU VIDAGE AUTOMATIQUE D'UN CONTENEUR

(30) Priorität: 27.06.1995 DE 19523225
(43) Veröffentlichungstag der Anmeldung: 15.04.1998
(73) Patentinhaber: Metallgesellschaft Aktiengesellschaft, 60325 Frankfurt am Main (DE)
(72) Erfinder: SANDLER, Peter, D-40474 Düsseldorf (DE); STROBACH, Karl, D-47269 Duisburg (DE)
(86) Internationale Anmeldenummer: EP9602766
(87) Internationale Veröffentlichungsnummer: WO9701500

(56) Entgegenhaltungen:
- DE-A- 3 510 291
- DE-U- 8 704 299
- FR-A- 1 363 385
- GB-A- 2 254 595
- US-A- 4 720 232

## Beschreibung

Die vorliegende Erfindung betrifft eine Vorrichtung zum automatischen Entleeren eines kastenförmigen Schüttgut-Containers über dessen eine zu einer der Seitenbordwände hin klappbare Stirnbordwand.

Vorrichtungen zum Entleeren von großen Behältern führen Kipp- und Wippbewegungen aus. Die Behälter werden auf den Vorrichtungen unter erheblichen apparativem Aufwand geöffnet, gekippt, entleert und in die waagerechte Stellung gebracht. Dieser Ablauf ist bei komplexen und schwer zugänglichen Anlagen sehr aufwendig. Das Entleeren von mehreren Behältern in relativ kurzer Zeit erfordert einen hohen Personalbedarf. Die Koordinierung der Arbeitsabläufe bindet Kapazitäten.

Aufgabe der vorliegenden Erfindung ist es, eine Vorrichtung zum automatischen Entleeren eines kastenförmigen Schüttgut-Containers bereitzustellen, auf die'der Schüttgut-Container mittels herkömmlicher Umschlageinrichtungen aufsetzbar und ohne großen Aufwand umsetzbar sowie schnell entleerbar ist.

Diese Aufgabe wird gelöst durch eine Vorrichtung, bestehend aus einem Untergestell mit einem darauf angeordneten an seiner einen Breitseite am Untergestell angelenkten in Längsrichtung um bis zu 60° hoch kippbaren Rahmen, mit dem der zum Kippen über die klappbare Stirnbordwand darauf aufgesetzte Schüttgut-Container starr kuppelbar ist, wobei die Vorgänge des Kuppelns und Entkuppelns zwischen Schüttgut-Container und Rahmen, des End- und Verriegelns sowie des Auf- und Zuklappens der Stirnbordwand mittels eines Drehwerkes und des Kippens des Rahmens programmgesteuert durchführbar sind.

In der GB-A-254595 ist zwar eine Vorrichtung zum Entleeren eines mit Schüttgut gefüllten kastenförmigen Behälters beschrieben, wobei zum Entleeren der nach oben offene Behälter zunächst mit einem aus zwei Abschnitten gebildeten Deckel verschlossen werden muß und dann um ca. 140° gekippt wird, so daß der gegenüber der Horizontalen geneigte Deckel dann den Boden des Behälters bildet und der tiefer liegende Abschnitt des Deckels zum Entleeren des Schüttguts geöffnet wird. Zum automatischen Entleeren eines kastenförmigen Schüttgut-Containers, der über eine seiner Stirnbordwände entleerbar ist, ist diese Vorrichtung nicht geeignet.

Die erfindungsgemäße Vorrichtung arbeitet vollautomatisch. Ein Kran setzt den Schüttgut-Container auf den Rahmen auf. Der Schüttgut-Container wird durch ein Twist-Lock-System mit dem Rahmen starr gekuppelt. Das Twist-Lock-System wird hydraulisch betätigt. Nachdem ein hydraulisch betätigter Zylinder über einen Hebelmechanismus die Gestängesicherung des Schüttgut-Containers gelöst hat, wird dessen klappbare Stirnbordwand von einem programmgesteuerten, hydraulisch betätigten Zylinder entriegelt, indem ein Bolzen die Entriegelung freigibt. Über ein elektrisch angetriebenes Drehwerk wird die klappbare Stirnbordwand geöffnet und nach dem Öffnen der Rahmen mittels eines Hydraulikzylinders hochgekippt, so daß der Inhalt des Schüttgut-Containers aus diesem herausrutschen kann. Der Entleerungsvorgang kann dadurch beschleunigt werden, daß der Rahmen über den Hydraulikzylinder in eine pulsierende Bewegung versetzt wird. Das Untergestell kann nach Rückführung des Rahmens in die waagerechte Position auf einer Fahrbahn seitlich zu einem Waschplatz gefahren werden, an dem der mit dem Rahmen festverbundene Schüttgut-Container mit Wasser gespült und gereinigt werden kann.

Eine bevorzugte Ausgestaltung der Erfindung besteht darin, daß mittels des Drehwerks die klappbare Stirnbordwand um bis zu 250° in Richtung auf eine der Seitenbordwände hin schwenkbar ist. Dieser Öffnungswinkel ist besonders vorteilhaft, da das Schüttgut ohne Gefahr der Beschädigung der Stirnbordwand ungehindert aus dem Schüttgut-Container austreten kann.

Im Rahmen der weiteren Ausgestaltung der Erfindung wird die Entleerung des Schüttgut-Containers dadurch beschleunigt, daß der Rahmen in pulsierende Bewegungen versetzbar ist. Besonders kurze Entleerungszeiten werden mit einer Frequenz von 3 mal in 1,5 sec erreicht.

Nach dem Entleeren des Schüttgut-Containers ist der Rahmen auf einen Neigungswinkel von etwa 15° zurückkippbar. Bei diesem Neigungswinkel wird die Reinigung des Schüttgut-Containers sehr wirkungsvoll durchgeführt.

Eine zweckmäßige Vorrichtung besteht darin, daß das Untergestell mittels eines elektrischen Antriebs auf einer Fahrbahn verfahrbar ist. Die Vorrichtung kann auch auf einem fahrbaren Untersatz, zum Beispiel auf einem Lkw, angebracht sein.

Erfindungsgemäß ist die Vorrichtung für die Entleerung von Bio-Containern einer Kompostieranlage für Bio-Abfall verwendbar.

Die Erfindung ist in der Zeichnung beispielhaft dargestellt und wird nachfolgend näher erläutert. Es zeigen:

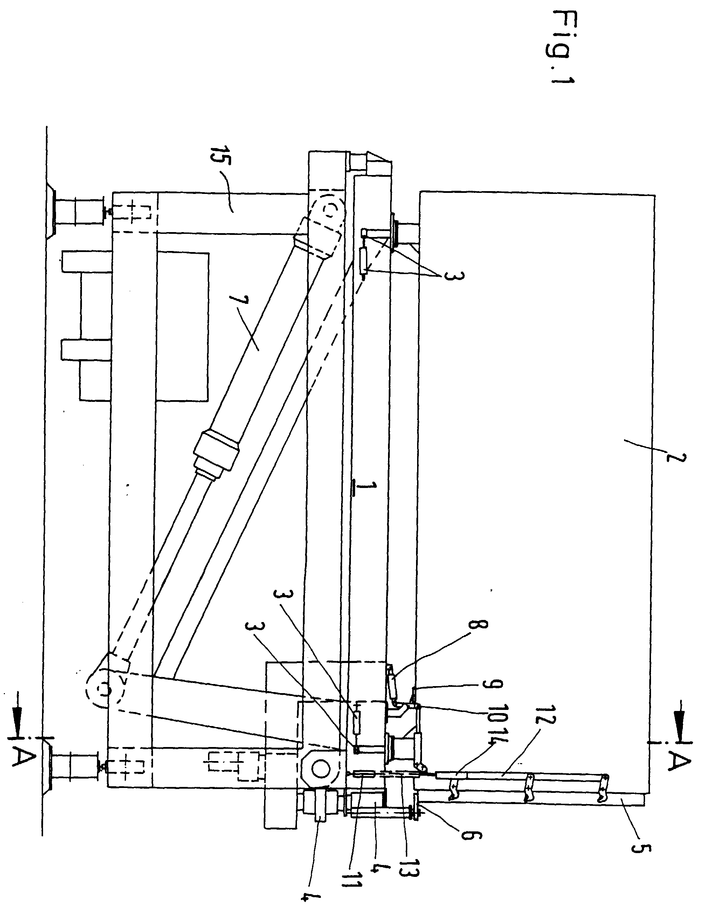

- Fig. 1: zeigt eine Seitenansicht der Vorrichtung mit einem Schüttgut-Container.

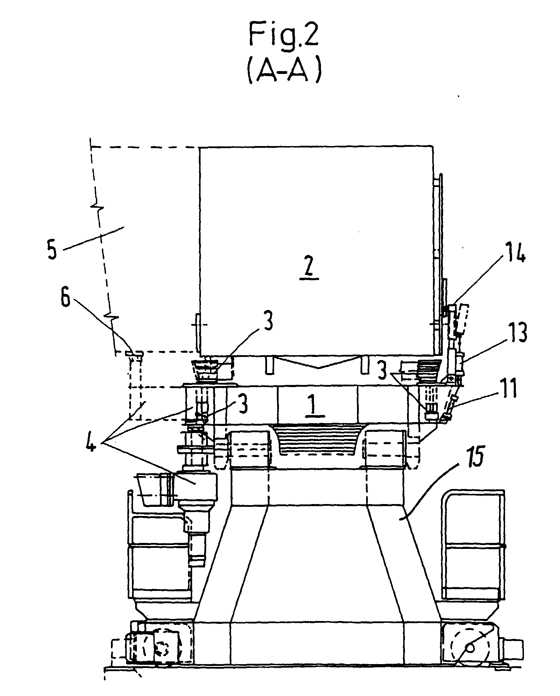

- Fig. 2: zeigt einen Schnitt A-A der Vorrichtung nach Fig.1.

Der Schüttgut-Container (2) wird mit einem Kran auf den Rahmen (1) des Untergestells (15) gesetzt und durch ein Twist-Lock-System (3) mit dem Rahmen (1) starr gekuppelt. Das Twist-Lock-System (3) wird programmgesteuert hydraulisch betätigt. Nachdem ein programmgesteuerter, hydraulisch betätigter Zylinder (8) über einen Hebelmechanismus (9) den Rastbolzen (10) freigibt, wird ein Entriegelungsbolzen durch einen programmgesteuerten, hydraulisch betätigten Zylinder (11) in die Öse (14) des Verriegelungsgestänges (12) der Stirnbordwand (5) eingefädelt. Anschließend wird das Verriegelungsgestänge (12) der Stirnbordwand (5) durch einen programmgesteuerten, hydraulisch betätigten Zylinder (13) nach unten gezogen, wodurch die Stirnbordwand (5) entriegelt wird. Ein an dem Rahmen (1) angebrachtes Drehwerk (4) zum Öffnen der Stirnbordwand (5) wird beim Absenken des Schüttgut-Containers (2) in eine an der Stirnbordwand (5) befindliche Öse (6) eingeführt. Die Stirnbordwand (5) wird nach Absenken des Schüttgut-Containers (2) durch das Drehwerk (4) mit einer Drehung von etwa 250° geöffnet. Anschließend wird der Rahmen (1) durch einen programmgesteuerten, hydraulisch betätigten Zylinder (7) um etwa 60° gekippt. Der Rahmen (1) kann durch den Zylinder (7) mit einer Frequenz von 3 mal in 1.5 sec pulsieren. Der Schüttgut-Container (2) wird entleert und danach in die waagerechte Stellung zurückgekippt. Anschließend wird das Untergestell (15) etwa 5 m zur Waschstation verfahren und der Rahmen (1) durch den hydraulisch betätigten Zylinder (7) auf einen Winkel von 15° hochgefahren. In dieser Stellung wird der Schüttgut-Container (2) gewaschen. Nach dem Waschen wird der Rahmen (1) in die waagerechte Stellung zurückgekippt. Die Stirnbordwand (5) wird programmgesteuert geschlossen und verriegelt. Danach wird der Schüttgut-Container (2) durch das Twist-Lock-System (3) programmgesteuert entkuppelt. Der Schüttgut-Container (2) kann durch einen Kran von dem Rahmen (1) abgehoben werden.

## Patentansprüche

1. Vorrichtung zum automatischen Entleeren eines kastenförmigen Schüttgut-Containers (2) über dessen eine zu eine der Seitenbordwände hin klappbare Stirnbordwand (5), gekennzeichnet durch ein Untergestell (15) mit einem darauf angeordneten, mit der einen Breitseite am Untergestell angelenkten in Längsrichtung um bis zu 60° hoch kipparen Rahmen (1), mit dem der zum Kippen über die klappbare Stirnbordwand (5) aufgesetzte Schüttgut-Container (2) starr kuppelbar ist, wobei die Vorgänge des Kuppelns und Entkuppelns von Rahmen und Schüttgut-Container, des Ent- und Verriegelns sowie des Auf- und Zuklappens der Stirnbordwand mittels eines Drehwerks (4) und des Kippens des Rahmens programmgesteuert durchführbar sind

2. Vorrichtung nach Anspruch 1, dadurch gekennzeichnet, daß durch das Drehwerk (4) die Stirnbordwand (5) um bis zu 250° schwenkbar ist.

3. Vorrichtung nach einem der Ansprüchen 1 und 2, dadurch gekennzeichnet, daß während der Leerung des Schüttgut-Containers (2) der Rahmen (1) in pulsierende Bewegung versetzbar ist.

4. Vorrichtung nach einem der Ansprüche 1 bis 3, dadurch gekennzeichnet, daß nach dem Entleeren des Schüttgut-Containers (2) der Rahmen (1) auf eine Neigung von etwa 15° absenkbar ist.

5. Vorrichtung nach einem der Ansprüche 1 bis 4, dadurch gekennzeichnet, daß das Untergestell (15) verfahrbar ist.

6. Verwendung der Vorrichtung nach einem der Ansprüche 1 bis 5, für Bio-Container in einer Kompostieranlage für Bio-Abfall.

## Claims

1. A device for automatically emptying a box-shaped bulk-material container (2) via one of its end gates (5) which can be folded down towards one of the side gates, characterised by an undercarriage (15) with a frame (1) located thereon and articulated to one broad side at the undercarriage and which can be tilted in the longitudinal direction by up to 60° with which the bulk-material container (2) placed for tilting over the folding end gate (5) can be rigidly coupled, the operations of coupling and uncoupling of the frame and bulk-material container, of unlocking and locking and also of opening up and closing the end gate by means of a rotating mechanism (4) and of tilting of the frame being able to be performed under program control.

2. A device according to Claim 1, characterised in that the end gate (5) can be pivoted by up to 250° by means of the rotating mechanism (4).

3. A device according to one of Claims 1 and 2, characterised in that the frame (1) can be caused to pulsate during the emptying of the bulk-material container (2).

4. A device according to one of Claims 1 to 3, characterised in that once the bulk-material container (2) has been emptied the frame (1) can be lowered to an inclination of about 15°.

5. A device according to one of Claims 1 to 4, characterised in that the undercarriage (15) is displaceable.

6. The use of the device according to one of Claims 1 to 5 for biological containers in a composting unit for biological waste.

## Revendications

1. Dispositif pour le vidage automatique d'un conteneur (2) de produit en vrac en forme de caisson par l'intermédiaire d'une (5) de ses ridelles frontales pouvant être rabattue vers une des ridelles latérales, caractérisé par un bâti (15) sur lequel est disposé un cadre (1), articulé au bâti par un côté large, pouvant être basculé en direction longitudinale jusqu'à 60° vers le haut et auquel peut être rigidement accouplé le conteneur (2) de produit en vrac posé, en vue du basculement, par l'intermédiaire de la ridelle (5) frontale rabattable, les opérations d'accouplement et de désaccouplement du cadre et du conteneur de produit en vrac, de déverrouillage et de verrouillage ainsi que d'ouverture et de fermeture par rabattement de la ridelle frontale pouvant être effectuées sous la commande d'un programme, au moyen d'un dispositif (4) de rotation et du basculement du cadre.

2. Dispositif suivant la revendication 1, caractérisé en ce que le dispositif (4) de rotation permet de faire pivoter la ridelle (5) frontale jusqu'à 250°.

3. Dispositif suivant la revendication 1 ou 2, caractérisé en ce que le cadre (1) peut être mis en mouvement vibratoire pendant le vidage du conteneur (2) de produit en vrac.

4. Dispositif suivant l'une des revendications 1 à 3, caractérisé en ce que le cadre (1) peut, à la suite du vidage du conteneur (2) de produit en vrac, être abaissé à une inclinaison d'environ 15°.

5. Dispositif suivant l'une des revendications 1 à 4, caractérisé en ce que le bâti (15) est itinérant.

6. Utilisation d'un dispositif suivant l'une des revendications 1 à 5 pour des bio-conteneurs dans une installation de compostage de bio-déchets.
